# EUROPÄISCHE PATENTSCHRIFT

(11) **EP 3 183 499 B1**
(45) Veröffentlichungstag und Bekanntmachung des Hinweises auf die Patenterteilung: **16.01.2019**
(21) Anmeldenummer: 15748254.8
(22) Anmeldetag: 12.08.2015
(51) Int. Cl.: F24C 7/08

(54) **BEDIENVORRICHTUNG FÜR EIN HAUSHALTSGERÄT MIT EINEM BEDIENELEMENT UND EINEM IM BEDIENELEMENT AUSGEBILDETEN ANZEIGEBEREICH**
OPERATING MECHANISM FOR A HOUSEHOLD APPLIANCE HAVING AN OPERATING ELEMENT AND A DISPLAY AREA CONFIGURED IN THE OPERATING ELEMENT
DISPOSITIF DE COMMANDE D'UN APPAREIL MÉNAGER MUNI D'UN ÉLÉMENT DE COMMANDE ET D'UNE ZONE D'AFFICHAGE RÉALISÉE DANS L'ÉLÉMENT DE COMMANDE

(30) Priorität: 19.08.2014 DE 102014216414
(43) Veröffentlichungstag der Anmeldung: 28.06.2017
(73) Patentinhaber: BSH Hausgeräte GmbH, 81739 München (DE)
(72) Erfinder: GOSS, Ulrich, 81739 München (DE); ORTMANN, Christoph, 81675 München (DE); SACHON, Robert, 80469 München (DE)
(86) Internationale Anmeldenummer: PCT/EP2015/068511
(87) Internationale Veröffentlichungsnummer: WO 2016/026741

(56) Entgegenhaltungen:
- EP-A1- 2 535 785
- DE-A1-102008 026 527
- DE-U1-202014 102 831
- US-A1- 2011 148 775

## Beschreibung

Die Erfindung betrifft eine Bedienvorrichtung für ein Haushaltsgerät, welche ein erstes Anzeigefeld und ein drehbares Bedienelement aufweist. Die Erfindung betrifft darüber hinaus auch ein Haushaltsgerät mit einer derartigen Bedienvorrichtung sowie ein Verfahren zum Betreiben einer Bedienvorrichtung für ein Haushaltsgerät.

Bedienvorrichtungen für Haushaltsgeräte sind in unterschiedlichsten Ausgestaltungen bekannt. Es sind in dem Zusammenhang als Bedienelemente Drücktasten, Kipptasten oder drehbare Bedienelemente ausgebildet. Es können auch berührsensitive Bedienelemente vorhanden sein. Auch Anzeigebereiche von Anzeigevorrichtungen dieser Bedienvorrichtungen sind in unterschiedlichsten Ausgestaltungen bekannt. Derartige elektronische Displays können unterschiedlichste Informationen bezüglich der Betriebszustände des Haushaltsgeräts anzeigen, oder aber auch darüber hinausgehend weitere Informationen über das Haushaltsgerät selbst oder über Zubereitungsprogramme oder Kochrezepte darstellen, wenn das Haushaltsgerät zum Zubereiten von Lebensmitteln ausgebildet ist und beispielsweise ein Backofen oder ein Mikrowellengerät oder ein Dampfgargerät ist. Entsprechendes ist jedoch auch bei Haushaltsgeräten zur Pflege von Wäschestücken wie beispielsweise einer Waschmaschine oder einem Wäschetrockner, oder bei Haushaltsgeräten zum Lagern und Konservieren von Lebensmitteln, wie beispielsweise einem Kühlschrank oder einem Gefriergerät oder einem Kühl-Gefrier-Kombigerät, möglich. Darüber hinaus kann derartiges auch bei Haushaltsgeräten zum Reinigen von Geschirr wie beispielsweise einem Geschirrspüler vorgesehen sein. Auch Dunstabzugshauben können entsprechend ausgestaltet sein.

Bei modernen Geräten ist die Informationsvielfalt bezüglich der anzuzeigenden Informationen sehr hoch, und es ist in modernen Anzeigefeldern auch möglich, verschiedene Menüebenen der Informationsdarstellung auszubilden und anzubieten.

Darüber hinaus ist es bei moderneren Geräten auch bekannt, dass bezüglich der Nutzerfreundlichkeit und zur Wahrung der Übersichtlichkeit ein Bedienelement und ein Anzeigebereich unmittelbar benachbart zueinander oder sogar ineinander übergehend bezüglich der Formgestaltung angeordnet sind und durch die diesbezüglich örtliche Nähe dem Nutzer die leichte Wahrnehmbarkeit durch einen einzigen Blick in eine Richtung sowohl des Bedienelements als auch des Anzeigebereichs ermöglicht ist.

Eine derartige Ausgestaltung ist beispielsweise aus der WO 2012/080154 A1 und der DE 10 2008 026 527 A1 bekannt.

Es ist Aufgabe der vorliegenden Erfindung, eine Bedienvorrichtung, ein Haushaltsgerät und ein Verfahren zum Betreiben einer Bedienvorrichtung zu schaffen, bei welcher beziehungsweise bei welchem ein einfaches und übersichtliches Bedienkonzept mit funktionell unterschiedlich ausgestalteten Elementen der Bedienvorrichtung ermöglicht ist.

Diese Aufgabe wird durch eine Bedienvorrichtung, ein Haushaltsgerät und ein Verfahren gemäß den unabhängigen Ansprüchen gelöst.

Eine erfindungsgemäße Bedienvorrichtung für ein Haushaltsgerät umfasst ein erstes Anzeigefeld und ein drehbares Bedienelement. Ein wesentlicher Gedanke der Erfindung ist darin zu sehen, dass dieses erste Anzeigefeld berührsensitiv ausgebildet ist und zumindest zwei verschiedene Funktionen des Haushaltsgeräts durch Berührung des Anzeigefelds an einem der jeweiligen Funktion zugehörigen Anzeigebereich auswählbar sind. Dies bedeutet somit, dass das Anzeigefeld Anzeigeflächen aufweist, an denen die Funktionen gekennzeichnet sind beziehungsweise ersichtlich sind, und somit durch Berühren ausgewählt werden können. Darüber hinaus umfasst das Bedienelement selbst auch einen Anzeigebereich. Das Anzeigen auf diesem Anzeigebereich des Bedienelements ist mit der über das Anzeigefeld ausgewählten Funktion gekoppelt. Ein Parameter der ausgewählten Funktion ist durch Betätigen des Bedienelements veränderbar und der dadurch eingestellte Parameterwert auf dem Anzeigebereich des Bedienelements ist dann angezeigt. Durch eine derartige Ausgestaltung wird die funktionelle Verknüpfung der gegenständlichen Elemente der Bedienvorrichtung unter Realisierung eines einfacheren und intuitiv nachvollziehbareren Bedienkonzepts ausgebildet. Darüber hinaus ist auch die Informationsdarstellung gekoppelt und die Informationen, die auf dem Anzeigefeld einerseits und dem Anzeigebereich des Bedienelements dargestellt sind, sind übersichtlich und logisch miteinander verknüpft präsentiert. Dies erleichtert einem Benutzer wesentlich, auch bei einer umfänglichen Darstellung von Informationen den Überblick zu behalten, die ausgewählte Funktion zu erkennen und die dann zusätzlich dargebotenen Informationen zuordnen und verstehen zu können. Dies wird insbesondere auch gerade dadurch erreicht, dass dann diese Funktionsinformation einerseits und die Zusatzinformation zur Funktion andererseits auf getrennten Displays, den Anzeigefeldern, dargestellt ist.

Erfindungsgemäß ist vorgesehen, dass ein Drehweg des Bedienelements in seiner Länge optisch angezeigt ist, insbesondere auf einem Anzeigebereich des Bedienelements angezeigt ist. Dies ist dahingehend besonders vorteilhaft, dass somit ein Nutzer jederzeit erkennen kann, inwieweit er den Drehring bereits gedreht hat und welche Betriebsbedienungseinstellung, insbesondere welche Parameterwerteinstellung damit verbunden ist. Fehlbedienungen oder die Unsicherheit eines Nutzers bezüglich der Drehbewegung des Drehrings im Hinblick darauf, dass er nur vermuten kann wie weit er den Drehring bereits gedreht hat, können dadurch vermieden werden.

Vorzugsweise ist vorgesehen, dass das Bedienelement einen Drehring aufweist, der den, insbesondere feststehenden, Anzeigebereich des Bedienelements umgibt, insbesondere vollständig umlaufend umgibt. Dadurch muss nicht das gesamte Bedienelement gedreht werden, sondern die manuelle Betätigung und Relativbewegung wird nur durch ein Teilelement des Bedienelements vollzogen, um dann insbesondere auch den Parameterwert des angezeigten Parameters verändern zu können. Indem das Bedienelement somit in merhere Komponenten separiert ist und einen bewegbaren und einen feststehenden Teil aufweist kann gerade bei dem feststehenden Anzeigebereich eine Information dauerhaft wahrnehmbar dargestellt werden, ohne dass auch hier dann eine Verdrehung erfolgen würde und die Erkennung durch einen Nutzer dadurch beeinträchtigt wäre.

Vorzugsweise ist vorgesehen, dass ein Anzeigefeld als Spalte aufgebaut ist, in welcher die Funktionen als Spaltenelemente angezeigt sind. Dadurch wird auch eine sehr übersichtliche und leicht wahrnehmbare Ordnung bezüglich der Mehrzahl von anzuzeigenden Informationen ermöglicht, sodass einerseits auch das Erkennen und das Auswählen durch Berühren des spezifischen Teilbereichs des Anzeigefelds erleichtert ist.

Vorzugsweise ist vorgesehen, dass ein Anzeigefeld als zumindest 2x2-Matrix aufgebaut ist, und die Funktionen in den Matrixfeldern angezeigt sind. Dies ist eine Alternative oder ergänzende Ausgestaltung zu der Anordnung in Spalten.

Bei einer bevorzugten Ausführung ist vorgesehen, dass die Bedienvorrichtung zumindest zwei separate Anzeigefelder aufweist. Dadurch kann die Trennung der Funktionsanzeige verbessert werden und die Übersichtlichkeit erhöht werden. Insbesondere ist vorgesehen, dass die Anzeigefelder und das Bedienelement in einer Reihe positioniert sind und das Bedienelement zwischen den Anzeigefeldern angeordnet ist. Die oben genannten Vorteile werden dadurch nochmals begünstigt. Die Reihe, in der die Anzeigefelder und das Bedienelement angeordnet sind, kann eine Zeile oder eine Spalte sein. Die Anzeigefelder sind dabei insbesondere in direkter benachbarter Anordnung zu dem Bedienelement positioniert, sodass auch diesbezüglich die oben genannte Zuordnung und Verknüpfung und somit die vollumfängliche Informationswahrnehmung durch einen Nutzer begünstigt ist.

Des Weiteren betrifft die Erfindung auch ein Haushaltsgerät mit einer erfindungsgemäßen Bedienvorrichtung oder einer vorteilhaften Ausgestaltung davon.

Bei einem erfindungsgemäßen Verfahren zum Betreiben einer Bedienvorrichtung für ein Haushaltsgerät werden zumindest zwei verschiedene Funktionen des Haushaltsgeräts durch Berühren eines berührsensitiven Anzeigefelds der Bedienvorrichtung an einem der jeweiligen Funktion zugehörigen Anzeigebereich ausgewählt. Ein Anzeigen auf einem Anzeigebereich des Bedienelements wird mit der über das Anzeigefeld ausgewählten Funktion gekoppelt und ein Parameter der ausgewählten Funktion wird durch Betätigen des Bedienelements verändert. Der dadurch eingestellte Parameterwert wird dann auf dem Anzeigebereich des Bedienelements angezeigt. Der Drehweg des Bedienelements wird in seiner Länge optisch durch ein Lichtband angezeigt. Die mit diesem Verfahren erreichbaren Vorteile wurden bereits bei der Darstellung der erfindungsgemäßen Bedienvorrichtung erläutert.

Vorteilhafte Ausführungen der erfindungsgemäßen Bedienvorrichtung sind als vorteilhafte Ausführungen des erfindungsgemäßen Verfahrens anzusehen, wobei dazu die gegenständlichen Merkmale der Bedienvorrichtung alleine oder in Wechselwirkung zur Realisierung der Verfahrensschritte und Abläufe ausgebildet sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: Perspektivische Darstellung eines Ausführungsbeispiels eines erfindungsgemäßen Haushaltsgeräts;
- Fig. 2: eine Darstellung eines ersten Ausführungsbeispiels einer Bedienvorrichtung in einem ersten Betriebszustand;
- Fig. 3: die Darstellung der Bedienvorrichtung gemäß Fig. 2 in einem zweiten Betriebszustand;
- Fig. 4: ein weiteres Ausführungsbeispiel einer Bedienvorrichtung in einem ersten Betriebszustand; und
- Fig. 5: die Darstellung gemäß Fig. 4 in einem zweiten Betriebszustand.

In den Figuren werden gleiche oder funktionsgleiche Elemente mit den gleichen Bezugszeichen versehen.

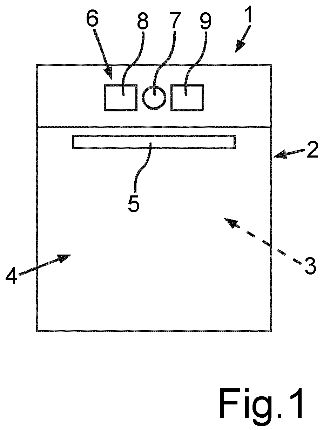

In Fig. 1 ist ein Haushaltsgerät 1 gezeigt, welches zum Zubereiten von Lebensmitteln ausgebildet ist und im Ausführungsbeispiel insbesondere ein Backofen ist. Das Haushaltsgerät 1 zum Zubereiten von Lebensmitteln kann jedoch auch ein anderes Gargerät sein. Es kann auch darüber hinaus ein Haushaltsgerät zum Reinigen von Geschirr oder zum Lagern und Konservieren von Lebensmitteln oder zur Pflege von Wäschestücken sein.

Das Haushaltsgerät 1 umfasst ein Gehäuse 2, in dem ein Garraum 3 ausgebildet ist, der durch Wände einer nicht dargestellten Muffel begrenzt ist. Eine frontseitige Beschickungsöffnung des Garraums 3 und somit auch der Muffel ist durch eine Tür 4 verschließbar. Die Tür 4 weist im Ausführungsbeispiel einen Türgriff 5 auf. Darüber hinaus umfasst das Haushaltsgericht 1 eine Bedienvorrichtung 6, welche ein drehbares Bedienelement 7 und ein erstes Anzeigefeld 8 sowie ein dazu separates und beabstandet angeordnetes zweites Anzeigefeld 9 aufweist. Wie aus der Darstellung in Fig. 1 zu erkennen ist, sind die beiden elektronischen Anzeigefelder 8 und 9 jeweils an gegenüberliegenden Seiten des Bedienelements 7 angeordnet, sodass das Bedienelement 7 quasi zwischen den Anzeigefeldern 8 und 9 positioniert ist, ohne dass weitere Komponenten zwischen einem Anzeigenfeld 8, 9 und dem Bedienelement 7 angeordnet sind. Es ist vorgesehen, dass die Anzeigefelder 8 und 9 unmittelbar benachbart und somit sehr nahe zum Bedienelement 7 angeordnet sind. Darüber hinaus sind die genannten Komponenten in einer horizontalen Reihe zueinander angeordnet und somit quasi in einer Zeile positioniert. Es kann jedoch auch vorgesehen sein, dass die genannten Komponenten, nämlich die Anzeigefelder 8 und 9 und das Bedienelement 7 in einer senkrechten Reihe und somit in einer Spalte zueinander angeordnet sind.

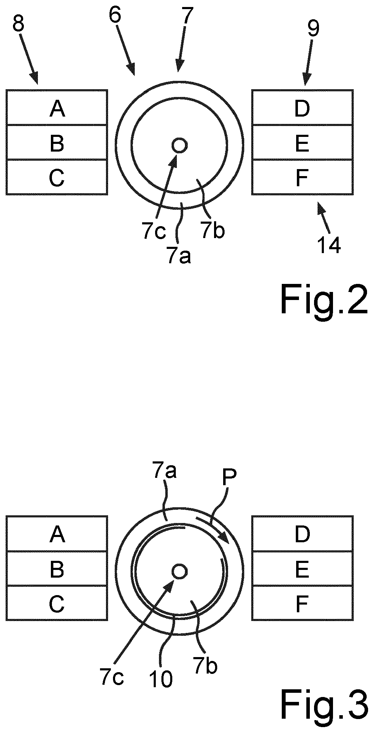

In Fig. 2 ist eine beispielhafte Darstellung der Bedienvorrichtung 6 gezeigt. Das Bedienelement 7 kann ein einzelner Drehkurbel-Hebel sein. Vorzugsweise ist vorgesehen, dass das Bedienelement 7 einen Drehring 7a aufweist, der einen feststehenden Anzeigebereich 7b des Bedienelements 7 umlaufend vollständig umgibt. Es ist zu erkennen, dass bei dem Anzeigefeld 8, welches als gesamtes berührsensitiv ausgebildet ist, als Ausführungsbeispiel drei verschiedene Funktionen A, B und C in einer Spalte in jeweiligen Teilflächen angezeigt sind. Darüber hinaus sind in dem weiteren Anzeigefeld 9 weitere Funktionen D, E und F ebenfalls in einer Spalte und in jeweiligen Teilflächen angezeigt. Auch das Anzeigefeld 9 ist als berührsensitives Anzeigefeld ausgebildet. Im Hinblick auf das Bedienkonzept ist vorgesehen, dass beispielsweise dann, wenn ein Nutzer die Funktion A auswählen und dann durchführen will, er auf die Teilfläche drückt beziehungsweise diese berührt, auf welcher diese Funktion A im Anzeigefeld 8 angezeigt ist. Sie wird dann ausgewählt.

Das Anzeigen von Informationen auf dem Anzeigebereich 7b des Bedienelements 7 ist mit der Auswahl einer Funktion in einem Anzeigefeld 8 oder 9 gekoppelt. Dies ist derart realisiert, dass ein Parameter der ausgewählten Funktion durch Betätigen des Bedienelements 7, insbesondere durch Drehen des Drehrings 7a veränderbar ist und ein dadurch eingestellter Parameterwert 7c auf dem Anzeigebereich 7b des Bedienelements 7 angezeigt ist. Im vorliegenden Fall ist somit mit der Auswahl der Funktion A automatisch eine Anzeige des Parameters auf dem Anzeigebereich 7b verknüpft und mit Drehen des Drehrings 7a wird dann ein Parameterwert verändert und dies dann angezeigt beziehungsweise der endgültig eingestellte Parameterwert dann dargestellt. Dies is auch in Fig. 3 gezeigt, bei welcher dann der weitere Betriebszustand gezeigt ist, bei welchem nach der Auswahl der Funktion A in Fig. 2 durch Berühren der spezifischen Teilfläche durch Drehen des Drehrings 7a dieser Parameterwert verändert und angezeigt wird. Das Drehen des Drehrings 7a ist auch durch den Pfeil P in Fig. 3 symbolisiert. Vorteilhafter Weise umfasst das Bedienelement 7 ein ringförmig ausgebildetes Lichtband, welches benachbart zum Drehring 7a angeordnet ist, im Ausführungsbeispiel insbesondere an einem dem Anzeigebereich 7b zugewandten Innenrand angeordnet ist.

Darüber hinaus ist das Lichtband 10 durch Lichtelemente gebildet, die bei optischem Aufleuchten eine zusammenhängende Lichtlinie oder eine diesbezüglich segmentierte Lichtlinie, die dann beispielsweise als gestrichelte Linie gezeigt ist, erzeugt. Dieses Lichtband ist vorzugsweise in seinen Lichtquellen ebenfalls feststehend, so dass der Drehring 7a relativ dazu bewegt ist. Durch dieses Lichtband wird einem Nutzer leicht wahrnehmbar signalisiert, wie weit er den Drehring 7a in Laufrichtung bereits gedreht hat und somit auch im Hinblick auf maximal einstellbare Parameterwerte bereits einfach erkennt wie hoch der eingestellte Wert im Vergleich zum Maximalwert und/oder zum Minimalwert bereits eingestellt ist.

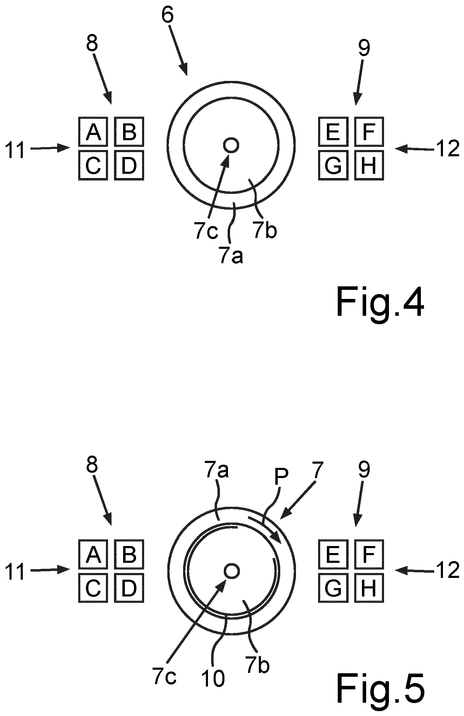

In Fig. 4 ist ein weiteres Ausführungsbeispiel der Bedienvorrichtung 6 gezeigt. Im Unterschied zur Darstellung gemäß Fig. 2 und Fig. 3 sind hier die Funktionen A bis H gezeigt und in den jeweiligen Anzeigefeldern 8 und 9 nicht in Spalten angeordnet beziehungsweise gruppiert sondern in jeweils Matrixfeldern angeordnet. So kann in Fig. 4 erkannt werden, dass die Darstellung der Funktionen A bis D in einer 2x2-Matrix 11 dargestellt sind. Entsprechend ist dies auf dem Anzeigefeld mit den Funktionen E bis H realisiert, wobei auch dort eine 2x2-Matrix 12 ausgebildet ist.

Bei dem gezeigten Ausführungsbeispiel sind die Anzeigefelder 8 und 9 und das Bedienelement 7 in einer horizontalen Reihe und somit in einer Zeile zueinander angeordnet und somit unmittelbar und direkt zueinander benachbart positioniert. Es kann diesbezüglich auch eine Spalte als dann senkrechte Reihe ausgebildet sein.

### Bezugszeichenliste

- 1: Haushaltsgerät
- 2: Gehäuse
- 3: Garraum
- 4: Tür
- 5: Türgriff
- 6: Bedienvorrichtung
- 7: Bedienelement
- 7a: Drehring
- 7b: Anzeigebereich
- 8: Anzeigefeld
- 9: Anzeigefeld
- 10: Lichtband

## Patentansprüche

1. Bedienvorrichtung (6) für ein Haushaltsgerät (1), mit einem ersten Anzeigefeld (8, 9) und einem drehbaren Bedienelement (7), wobei das Anzeigefeld (8, 9) berührsensitiv ausgebildet ist und zumindest zwei verschiedene Funktionen (A bis H) des Haushaltsgeräts (1) durch Berühren des Anzeigefelds (8, 9) an einem der jeweiligen Funktion zugehörigen Anzeigebereich auswählbar sind, **dadurch gekennzeichnet, dass** das Bedienelement (7) einen Anzeigebereich (7b) aufweist, und wobei ein Anzeigen auf dem Anzeigebereich (7b) mit der über das Anzeigefeld (8, 9) ausgewählten Funktion (A bis H) gekoppelt ist und ein Parameter der ausgewählten Funktion (A bis H) durch Betätigen des Bedienelements (7) veränderbar ist und ein dadurch eingestellter Parameterwert (7c) auf dem Anzeigebereich (7b) des Bedienelements (7) sowie ein Drehweg des Bedienelements (7) in seiner Länge durch ein Lichtband (10) optisch angezeigt ist.

2. Bedienvorrichtung (6) nach Anspruch 1, **dadurch gekennzeichnet, dass** das Bedienelement (7) einen Drehring (7a) aufweist, der den Anzeigebereich (7b) umgibt.

3. Bedienvorrichtung (6) nach Anspruch 1 oder 2, **dadurch gekennzeichnet, dass** das Anzeigefeld (8, 9) als Spalte aufgebaut ist, in welcher die Funktionen (A bis H) als Spaltenelemente in den Anzeigebreichen angezeigt sind.

4. Bedienvorrichtung (6) nach einem der vorhergehenden Ansprüche, **dadurch gekennzeichnet, dass** das Anzeigefeld (8, 9) als zumindest 2x2-Matrix (11, 12) aufgebaut ist, und die Funktionen (A bis H) in Matrixfeldern der Matrix (11, 12) angezeigt sind.

5. Bedienvorrichtung (6) nach einem der vorhergehenden Ansprüche, **dadurch gekennzeichnet, dass** sie zumindest ein von dem Anzeigefeld (8, 9) separates, zweites Anzeigefeld (8, 9) aufweist.

6. Bedienvorrichtung nach Anspruch 5, **dadurch gekennzeichnet, dass** die Anzeigefelder (8, 9) und das Bedienelement (7) in einer Reihe positioniert sind und das Bedienelement (7) zwischen den Anzeigefeldern (8, 9) angeordnet ist.

7. Haushaltsgerät (1) mit einer Bedienvorrichtung (6) nach einem der vorhergehenden Ansprüche.

8. Verfahren zum Betreiben einer Bedienvorrichtung (6) für ein Haushaltsgerät (1), mit einem ersten Anzeigefeld (8, 9) und einem drehbaren Bedienelement (7), wobei zumindest zwei verschiedene Funktionen (A bis H) des Haushaltsgeräts (1) durch Berühren des berührsensitiven Anzeigefelds (8, 9) an einem der jeweiligen Funktion zugehörigen Anzeigebereich ausgewählt werden können, **dadurch gekennzeichnet, dass** ein Anzeigen auf einem Anzeigebereich (7b) des Bedienelements (7) mit der über das Anzeigefeld (8, 9) ausgewählten Funktion (A bis H) gekoppelt wird und ein Parameter der ausgewählten Funktion (A bis H) durch Betätigen des Bedienelements (7) verändert wird und ein dadurch eingestellter Parameterwert (7c) auf dem Anzeigebereich (7b) des Bedienelements (7) sowie ein Drehweg des Bedienelements (7) in seiner Länge durch ein Lichtband (10) optisch angezeigt wird.

## Claims

1. Operating mechanism (6) for a household appliance (1), having a first display panel (8, 9) and a rotatable operating element (7), wherein the display panel (8, 9) is configured as touch-sensitive and at least two different functions (A to H) of the household appliance (1) can be selected by touching the display panel (8, 9) in a display area associated with the respective function, **characterised in that** the operating element (7) has a display area (7b), and wherein a display in the display area (7b) is coupled to the function (A to H) selected via the display panel (8, 9) and a parameter of the selected function (A to H) can be changed by actuating the operating element (7) and a thereby adjusted parameter value (7c) is displayed in the display area (7b) of the operating element (7) and a rotational path of the operating element (7) is displayed visually lengthwise by a light band (10).

2. Operating mechanism (6) according to claim 1, **characterised in that** the operating element (7) has a rotating ring (7a) which surrounds the display area (7b).

3. Operating mechanism (6) according to claim 1 or 2, **characterised in that** the display panel (8, 9) is designed as a column, in which the functions (A to H) are displayed as column elements in the display regions.

4. Operating mechanism (6) according to one of the preceding claims, **characterised in that** the display panel (8, 9) is designed as an at least 2x2 matrix (11, 12), and the functions (A to H) are displayed in matrix fields of the matrix (11, 12).

5. Operating mechanism (6) according to one of the preceding claims, **characterised in that** it has at least one second display panel (8, 9) separate from the display panel (8, 9).

6. Operating mechanism according to claim 5, **characterised in that** the display panels (8, 9) and the operating element (7) are positioned in a row and the operating element (7) is arranged between the display panels (8, 9).

7. Household appliance (1) having an operating mechanism (6) according to one of the preceding claims.

8. Method for operating an operating mechanism (6) for a household appliance (1), having a first display panel (8, 9) and a rotatable operating element (7), wherein at least two different functions (A to H) of the household appliance (1) can be selected by touching the touch-sensitive display panel (8, 9) in a display area associated with the respective function, **characterised in that** a display in a display area (7b) of the operating element (7) is coupled to the function (A to H) selected via the display panel (8, 9) and a parameter of the selected function (A to H) is changed by actuating the operating element (7) and a thereby adjusted parameter value (7c) is displayed in the display area (7b) of the operating element (7) and a rotational path of the operating element (7) is displayed visually lengthwise by a light band (10).

## Revendications

1. Dispositif de commande (6) pour un appareil ménager (1) doté d'un premier panneau d'affichage (8, 9) et d'un élément de commande rotatif (7), dans lequel le panneau d'affichage (8, 9) est conçu de façon à être sensible au contact et au moins deux fonctions différentes (A à H) de l'appareil ménager peuvent être sélectionnées par contact sur le panneau d'affichage (8, 9) sur une zone d'affichage associée à la fonction respective,
**caractérisé en ce que** l'élément de commande (7) comprend une zone d'affichage (7b) et dans lequel une indication sur la zone d'affichage (7b) est couplée à la fonction sélectionnée (A à H) sur le panneau d'affichage (8, 9) et un paramètre de la fonction sélectionnée (A à H) peut être modifié en actionnant l'élément de commande (7) et une valeur de paramètre (7c) réglée ainsi est affichée sur la zone d'affichage (7b) de l'élément de commande (7) ainsi qu'un trajet de rotation de l'élément de commande (7) dans sa longueur de façon optique par un faisceau lumineux (10).

2. Dispositif de commande (6) selon la revendication 1, **caractérisé en ce que** l'élément de commande (7) comporte une bague rotative (7a), qui entoure la zone d'affichage (7b).

3. Dispositif de commande (6) selon la revendication 1 ou 2, **caractérisé en ce que** le panneau d'affichage (8, 9) est conçu sous forme d'une colonne, dans laquelle les fonctions (A à H) sont affichées sous forme d'éléments de colonne dans les zones d'affichage.

4. Dispositif de commande (6) selon l'une des revendications précédentes, **caractérisé en ce que** le panneau d'affichage (8, 9) est conçu sous forme d'une matrice 2 x 2 (11, 12), et les fonctions (A à H) sont affichées dans les cases de matrice de la matrice (11, 12).

5. Dispositif de commande (6) selon l'une des revendications précédentes, **caractérisé en ce qu'**il comporte au moins un second panneau d'affichage (8, 9) séparé du panneau d'affichage (8, 9).

6. Dispositif de commande selon la revendication 5, **caractérisé en ce que** les panneaux d'affichage (8, 9) et l'élément de commande (7) sont positionnés dans une rangée et l'élément de commande (7) est disposé entre les panneaux d'affichage (8, 9).

7. Appareil ménager (1) doté d'un dispositif de commande (6) selon l'une quelconque des revendications précédentes.

8. Procédé pour faire fonctionner un dispositif de commande (6) d'un appareil ménager, (1) doté d'un premier panneau d'affichage (8, 9) et d'un élément de commande (7) rotatif, dans lequel au moins deux fonctions (A à H) différentes de l'appareil ménager (1) peuvent être sélectionnées par contact sur le panneau d'affichage (8, 9) sensible au contact au niveau d'une zone d'affichage associée à la fonction respective, **caractérisé en ce qu'**une indication sur une zone d'affichage (7b) de l'élément de commande (7) est couplée à la fonction sélectionnée (A à H) via le panneau d'affichage (8, 9) et un paramètre de la fonction sélectionnée (A à H) est modifié par un actionnement de l'élément de commande (7), et une valeur de paramètre (7c) réglée ainsi est affichée sur la zone d'affichage (7b) de l'élément de commande (7) et un trajet de rotation de l'élément de commande (7) est affiché de façon optique dans sa longueur par un faisceau lumineux (10).
